# FASCICULE DE BREVET EUROPEEN

(11) **EP 2 070 758 B1**
(45) Date de publication et mention de la délivrance du brevet: **31.08.2011**
(21) Numéro de dépôt: 08171124.4
(22) Date de dépôt: 09.12.2008
(51) Int. Cl.: B60K 37/00

(54) **Dispositif de commande d'un accessoire automobile et procédé de mise en oeuvre d'un tel dispositif de commande**
System zur Steuerung eines Kraftfahrzeugzubehörteils und Umsetzungsverfahren einer solchen Steuervorrichtung
Control device for an automobile accessory and method for implementing such a control device

(30) Priorité: 10.12.2007 FR 0708565
(43) Date de publication de la demande: 17.06.2009
(73) Titulaire: Valeo Systèmes Thermiques, 78321 Le Mesnil Saint Denis Cedex (FR)
(72) Inventeur: Giraud, Frédéric, 78610 Le Perray en Yvelines (FR); Akoone, Farouk, 78180 Montigny le Bretonneux (FR)
(74) Mandataire: Léveillé, Christophe

(56) Documents cités:
- EP-A- 1 798 588
- WO-A-01/94156
- DE-C1- 10 039 432
- JP-A- 2005 321 948
- US-A1- 2005 024 324

## Description

### Domaine technique de l'invention.

La présente invention est du domaine des dispositifs de commande d'un accessoire d'un véhicule automobile, tel qu'une installation de ventilation, de chauffage et/ou de climatisation. Elle a pour objet un tel dispositif de commande ainsi qu'un procédé de mise en oeuvre dudit dispositif.

### Etat de la technique.

Un véhicule automobile est couramment équipé d'un accessoire qui n'est pas indispensable au fonctionnement du véhicule et qui ne participe pas à la mise en oeuvre d'un moteur du véhicule. Un tel accessoire est un dispositif secondaire qui n'est pas essentiel pour permettre au véhicule de remplir sa fonction première, à savoir se déplacer. Cet accessoire est indifféremment un dispositif mécanique et/ou un dispositif électronique. Parmi ces accessoires, on connaît notamment une installation de ventilation, de chauffage et/ou de climatisation, un téléphone portable, un ordinateur de bord, un autoradio, un loquet de fermeture/ouverture d'une portière du véhicule, voire une vitre de ce dernier, ou tout autre accessoire analogue. D'une manière générale, l'accessoire est embarqué à bord du véhicule, en étant soit entièrement logé à l'intérieur de l'habitacle du véhicule, tel qu'un téléphone portable, soit partiellement logé à l'intérieur de l'habitacle, telle qu'une installation du type susvisé.

La mise en oeuvre d'un tel accessoire est contrôlée à partir d'un dispositif de commande accessible à un utilisateur. On comprendra par mise en oeuvre un choix à opérer par l'utilisateur entre différents états de fonctionnement de l'accessoire. Dans le cas de l'installation, la mise en oeuvre consiste notamment en un premier choix à effectuer entre un état de marche et un état d'arrêt, puis un second choix à effectuer entre divers états de marche, tels que par exemple ventilation seule, ventilation et chauffage simultanés. Dans le cas du loquet, la mise en oeuvre réside en un choix à opérer entre un état de fermeture et un état d'ouverture de la portière.

Le dispositif de commande est rapporté sur un élément structurel du véhicule par l'intermédiaire de moyens de fixation. L'élément structurel est indifféremment logé à l'intérieur de l'habitacle ou placé en bordure de dernier, de telle sorte que le dispositif de commande soit accessible à l'utilisateur. L'élément structurel est à titre indicatif susceptible d'être une planche de bord, une console arrière, une portière, un plafonnier, un pare-soleil ou analogue.

Le dispositif de commande est par exemple agencé en un clavier comportant des touches pour la saisie d'un ordre de commande de l'accessoire. Le dispositif de commande est par exemple encore agencé en un bouton, indifféremment rotatif, basculant ou translatif, dont la manoeuvre commande la mise en oeuvre de l'accessoire. Pour connaître un environnement technologique proche de la présente invention, on pourra par exemple se reporter au document US2004011835 (KIM BOYEAN) qui décrit un pare-soleil supportant un clavier de commande d'un accessoire.

On pourra également se reporter au document JP2004138549 (Fujitsu Ten Ltd) qui décrit un dispositif de commande pourvu d'un moyen de délimitation projetant un clavier virtuel sur une surface plane d'un élément de structure, selon le préambule de la revendication 1.

D'une manière générale, de tels dispositifs de commande sont lourds, encombrants, voire gênants pour l'utilisateur. A contrario, certains des dispositifs de commande du type susvisé sont trop petits, notamment pour permettre une saisie fiable, rapide et aisée d'ordres de commande de l'accessoire. Par ailleurs, les moyens de fixation du dispositif de commande à l'élément structurel s'avèrent complexes à mettre en oeuvre et sont fréquemment inadaptés, fragiles et peu fiables. Finalement, de nombreux dispositifs de commande présentent une complexité surdimensionnée pour la mise en oeuvre d'un dispositif non essentiel au déplacement du véhicule.

### Objet de l'invention.

Le but de la présente invention est de proposer un dispositif de commande qui soit adapté à une utilisation relativement quelconque qui est susceptible d'évoluer dans le temps, sans nécessiter des modifications conséquentes dudit dispositif, ce dernier étant par ailleurs peu encombrant, aisé à utiliser et facile à placer à l'intérieur de l'habitacle du véhicule.

Le dispositif de la présente invention est un dispositif de commande d'un accessoire d'un véhicule automobile.

Selon la présente invention, le dispositif de commande est défini par l'objet de la revendication 1.

En d'autres termes, un tel dispositif de commande comprend un moyen de délimitation pour repérer au moins une zone d'un premier élément structurel du véhicule. Préférentiellement, le moyen de délimitation permet de repérer plusieurs zones dudit premier élément qui correspondent notamment à autant d'instructions de commande disponibles pour la mise en oeuvre de l'accessoire. Par exemple, à une zone spécifique peut correspondre un caractère alphanumérique, ou une variation souhaitée de température à l'intérieur de l'habitacle du véhicule, ou un choix d'une zone de l'habitacle, ou un choix d'une incrémentation de fréquence radio, selon la nature de l'accessoire.

Un tel dispositif de commande comprend un moyen de détermination pour identifier la présence d'un élément en vis-à-vis d'une dite zone ou en appui sur celle-ci et pour calculer une information relative à la position de cet élément. Plus particulièrement, l'élément est susceptible d'être un objet dirigé par l'utilisateur en direction de ladite zone, cet objet pouvant être le doigt de l'utilisateur, un stylet ou analogue.

Un tel dispositif de commande comprend aussi un moyen de transformation de ladite information pour déduire de cette dernière une instruction de commande souhaitée par l'utilisateur, cette instruction étant en correspondance avec la dite zone du premier élément structurel.

A partir de l'association et/ou de la coopération des moyens respectifs de délimitation, de détermination et de transformation, le dispositif de commande met en oeuvre l'accessoire selon le choix souhaité par l'utilisateur.

Selon un mode de réalisation de l'invention, le moyen de détermination comprend une couche sensitive.

Selon un autre mode de réalisation de l'invention, ledit moyen de détermination comprenant un premier dispositif émetteur d'ondes et un deuxième dispositif récepteur d'ondes,

Selon une première variante de réalisation, le moyen de délimitation comprend au moins un relief ménagé en surface du premier élément structurel.

Le moyen de délimitation est aisément réalisable par exemple par moulage et/ou surmoulage dudit premier élément structurel. Il en ressort que le moyen de délimitation est susceptible d'être constitué d'une pluralité de reliefs délimitant lesdits zones. Il en découle que le moyen de délimitation permet notamment de simuler un clavier de saisie d'ordres de commande qui est susceptible d'être perçu tactilement par un utilisateur.

Selon une deuxième variante de réalisation, le moyen de délimitation comprend un élément visuel rapporté en surface du premier élément structurel.

Un tel moyen de délimitation est aisément réalisable par exemple par apport d'un élément visuel, tel qu'une icône, un signe ou analogue, susceptible d'être perçu visuellement par l'utilisateur.

Selon une troisième variante de réalisation, le moyen de délimitation comprend des moyens de projection d'au moins une image sur le premier élément structurel.

Un tel moyen de délimitation est aisément réalisable par exemple par projection d'une image, tel qu'une icône, un signe, un clavier, un caractère alphanumérique ou analogue, susceptible d'être perçu visuellement par l'utilisateur. Lesdits moyens de projection sont portés par un deuxième élément structurel, préférentiellement le plus éloigné possible du premier élément structurel, pour éviter autant que possible une distorsion optique due à un éloignement des éléments structurels entre eux.

Un tel circuit électroluminescent émet de la lumière lorsqu'une tension est appliquée à des bornes qu'il comporte, de telle sorte que le circuit électroluminescent forme un bornage de ladite zone pour cerner cette dernière.

Le circuit électroluminescent est par exemple rapporté sur le premier élément structurel.

Le circuit électroluminescent est par exemple intégré au premier élément structurel.

Préférentiellement, le premier dispositif est un émetteur d'ondes infrarouges tandis que le deuxième dispositif est un récepteur d'ondes infrarouges.

Ces dispositions sont telles que le premier dispositif émet des ondes infrarouges, qui sont susceptibles d'être diffractées par un obstacle à la propagation des ondes émises par le premier dispositif, de telle sorte que les ondes diffractées soient reçues par le deuxième dispositif, en vue de déterminer la position de l'obstacle.

Le moyen de détermination est avantageusement rapporté sur le premier élément structurel.

Ces dispositions sont telles que, dans une hypothèse où le premier élément structurel est mobile, cette mobilité n'affecte en rien ni l'émission des dites ondes, ni la réception des dites ondes diffractées.

Le premier élément structurel est notamment un pare-soleil du véhicule.

Le procédé pour la mise en oeuvre d'un tel dispositif de commande est principalement reconnaissable en ce qu'il comporte au moins une première étape consistant à détecter la présence d'un obstacle en vis-à-vis d'une zone spécifique préalablement délimitée.

De préférence, l'étape préalable de délimitation de ladite zone spécifique consiste à projeter une image sur le premier élément structurel du véhicule.

### Description des figures.

La présente invention sera mieux comprise, et des détails en relevant apparaîtront, à la lecture de la description qui va être faite de diverses variantes de réalisation en relation avec les figures des planches annexées, dans lesquelles :
La fig.1 est une illustration schématique d'un dispositif de commande d'un accessoire d'un véhicule automobile selon la présente invention.
Les fig.2 et fig.3 sont des illustrations schématiques respectivement d'une première et d'une deuxième variante de réalisation d'un moyen de délimitation constitutif du dispositif de commande représenté sur la fig.1.
Les fig.4 et fig.5 sont des illustrations schématiques respectivement de face et de côté d'une troisième variante de réalisation dudit moyen de délimitation.
La fig.6 est une illustration schématique d'une quatrième variante de réalisation dudit moyen de délimitation.
La fig.7 est une vue schématique de face d'une cinquième variante de réalisation dudit moyen de délimitation.
Les fig.8 et fig.9 sont des illustrations schématiques respectivement en coupe et de face d'une première forme de réalisation du dispositif de commande illustré sur la fig.1 et mettant en oeuvre le moyen de délimitation illustré sur les fig.6 ou fig.7. La fig.10 est une vue schématique de face d'une deuxième forme de réalisation du dispositif de commande illustré sur la fig.1 et mettant en oeuvre le moyen de délimitation illustré sur la fig.6 ou fig.7.
Les fig.11 à fig.13 sont des vues schématiques respectivement en perspective, en coupe transversale et en coupe longitudinale du dispositif illustré sur la fig.10.
La figure 14 est une vue schématique d'un autre mode de réalisation.

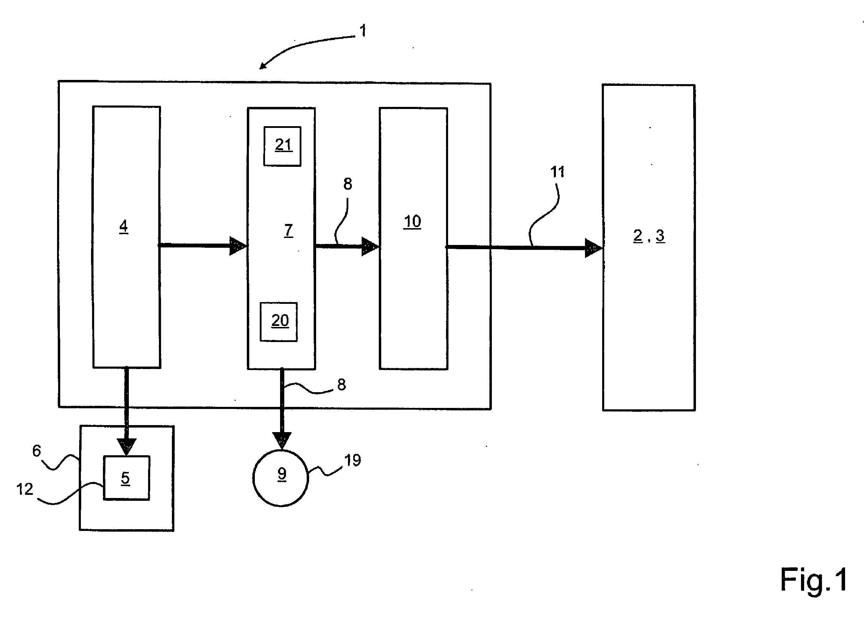

Sur la fig.1, un dispositif de commande 1 est destiné à contrôler la mise en oeuvre d'un accessoire 2 d'un véhicule automobile. L'accessoire 2 est un dispositif relativement quelconque qui n'est pas essentiel à la fonction première du véhicule, c'est-à-dire à son déplacement. Typiquement, l'accessoire 2 est une installation 3 de ventilation, de chauffage et/ou de climatisation qui est destinée à réguler les paramètres aérothermiques de l'air contenu à l'intérieur de l'habitacle du véhicule. Ladite installation 3 est mise en oeuvre à partir du dispositif de commande 1 qui est placé à l'intérieur de l'habitacle pour être accessible à un utilisateur du véhicule.

Il est avantageusement proposé par la présente invention un tel dispositif de commande 1 comprenant :
- un moyen de délimitation 4 d'une pluralité de zones 5 d'un premier élément structurel 6 du véhicule, chaque zone 5 étant associée à une instruction de commande 11 dudit accessoire 2,
- un moyen de détermination 7 d'une information 8 relative à la sollicitation d'au moins une des zones 5 du premier élément structurel 6, ledit moyen de détermination 7 comprenant un premier dispositif 20 émetteur d'ondes et un deuxième dispositif 21 récepteur d'ondes, et
- un moyen de transformation 10 de ladite information 8 en l'instruction de commande 11 de l'accessoire 2, ledit moyen de transformation 10 coopérant avec le moyen de détermination 7 pour déduire de ladite information 8 l'instruction de commande 11 souhaitée par l'utilisateur.

Ces dispositions visent à proposer un dispositif de commande 1 léger, peu encombrant, efficace et fiable, et qui est par ailleurs facile à utiliser, y compris par un utilisateur dont l'attention doit être la moins distraite possible.

Le moyen de délimitation 4 permet de fixer des limites 12 aux zones 5 du premier élément structurel 6. On comprendra que le moyen de délimitation 4 permet à l'utilisateur d'identifier les zones 5 qui symbolisent par exemple des touches d'un clavier, des icones, des caractères alphanumériques ou tout type de zones analogues. Le premier élément structurel 6 sur lequel les zones 5 sont délimitées est une pièce de nature quelconque qui est logé à l'intérieur de l'habitacle et/ou qui borde celui-ci, tel qu'une planche de bord, une console, un élément d'une portière du véhicule, un pare-soleil ou analogue.

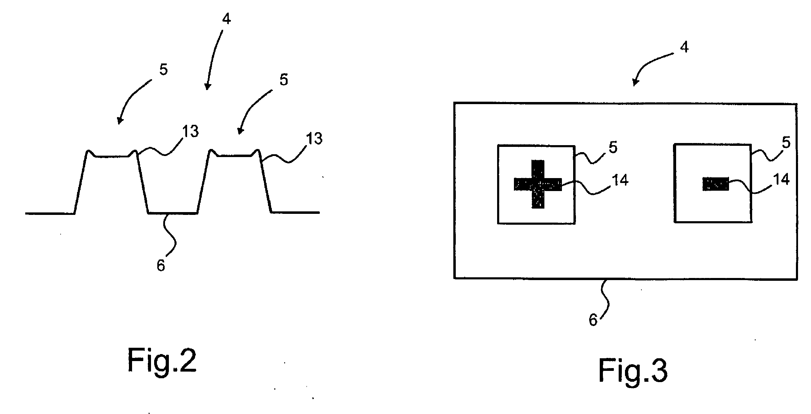

Selon une première variante de réalisation du moyen de délimitation 4 représentée sur la fig.2, ce dernier 4 comprend des reliefs 13 ménagés en surface du premier élément structurel 6. Ces reliefs 13 simulent tactilement par exemple des touches d'un clavier.

Selon une deuxième variante de réalisation du moyen de délimitation 4 représentée sur la fig.3, ce dernier 4 comprend un élément visuel 14 qui est rapporté en surface du premier élément structurel 6, par collage ou par tout autre moyen de fixation analogue. Cet élément visuel 14 est par exemple constitué d'un caractère alphanumérique, d'une forme géométrique, tel qu'un carré ou analogue, qui délimite une des zones 5 du premier élément structurel 6.

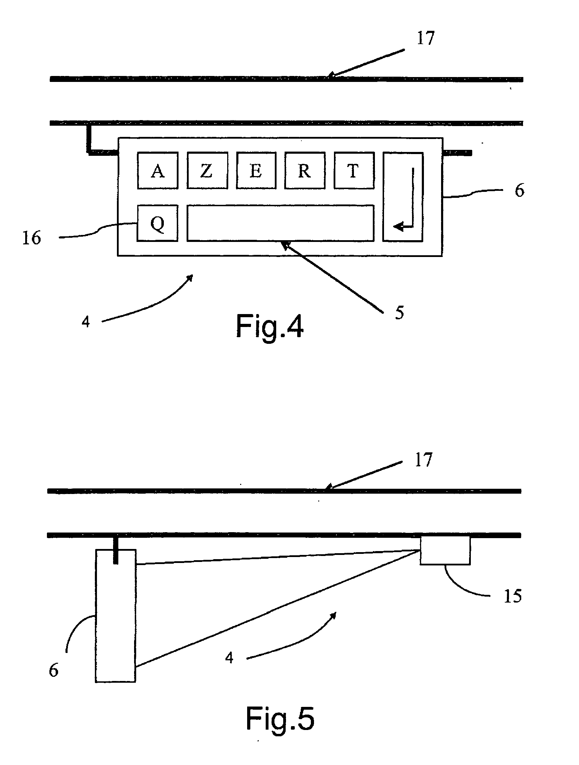

Selon une troisième variante de réalisation du moyen de délimitation 4 représentée sur les fig.4 et fig.5, ce dernier 4 comprend des moyens de projection 15 d'une pluralité d'images 16 sur le premier élément structurel 6. De manière analogue, ces images 16 sont susceptibles de représenter des touches d'un clavier. Les moyens de projection 15 sont indifféremment constitués d'un projecteur Laser ou d'un projecteur à écran à cristaux liquides, communément défini par l'acronyme anglo-saxon LCD pour « Liquid Crystal Display ». Les moyens de projection 15 sont fixés à un deuxième élément structurel 17 logé à l'intérieur de l'habitacle du véhicule et/ou bordant ce dernier, tel qu'un plafonnier ou analogue. Ces dispositions permettent de disposer les moyens de projection 15 à distance du premier élément structurel 6 pour éviter des distorsions et/ou des déformations optiques des images projetées 16.

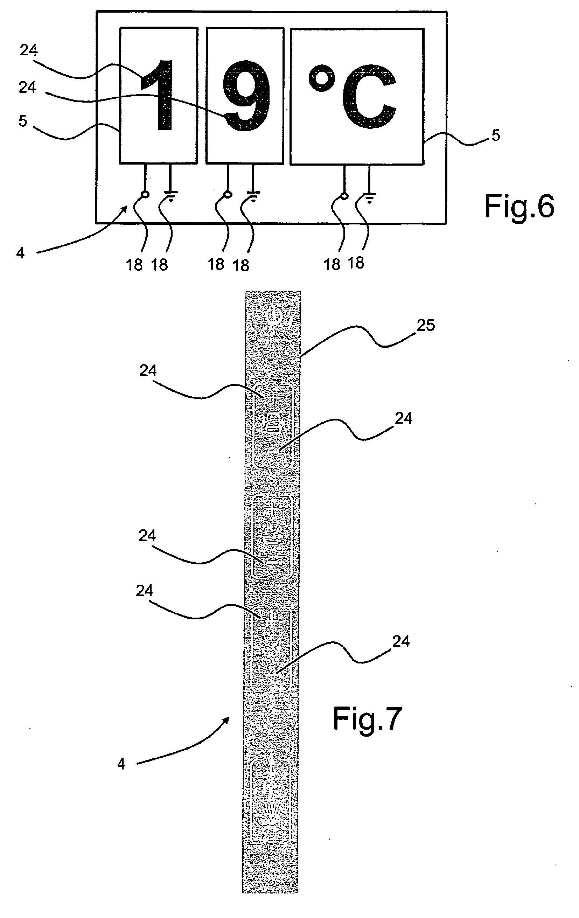

Selon une quatrième variante de réalisation du moyen de délimitation 4 représentée sur les fig.6 et fig.7, ce dernier 4 comprend une pluralité de circuits électroluminescents 24 qui produisent individuellement de la lumière lorsqu'une tension électrique est appliquée à leurs bornes respectives 18 représentées sur la fig.6. Les circuits électroluminescents 24 sont indifféremment rapportés sur ou intégrés au premier élément structurel 6. Les circuits électroluminescents 24 sont par exemple réalisés à partir d'un matériau à base de phosphore, éventuellement complété d'oxyde de titane et/ou de sulfure de zinc, de manganèse ou de cuivre. De manière courante, la tension appliquée aux bornes 18 de chaque circuit électroluminescent est de l'ordre de 100 Volts, pour un courant d'une intensité de l'ordre de 0,1 mA à une fréquence de 400 Hz. Les circuits électroluminescents sont rapportés sur une feuille électriquement isolante 25, notamment réalisée en matière plastique.

On comprendra finalement que le moyen de délimitation 4 est d'une nature relativement quelconque, indifféremment optique, électrique et/ou mécanique, qui offre la faculté de délimiter les zones 5 en surface du premier élément structurel 6.

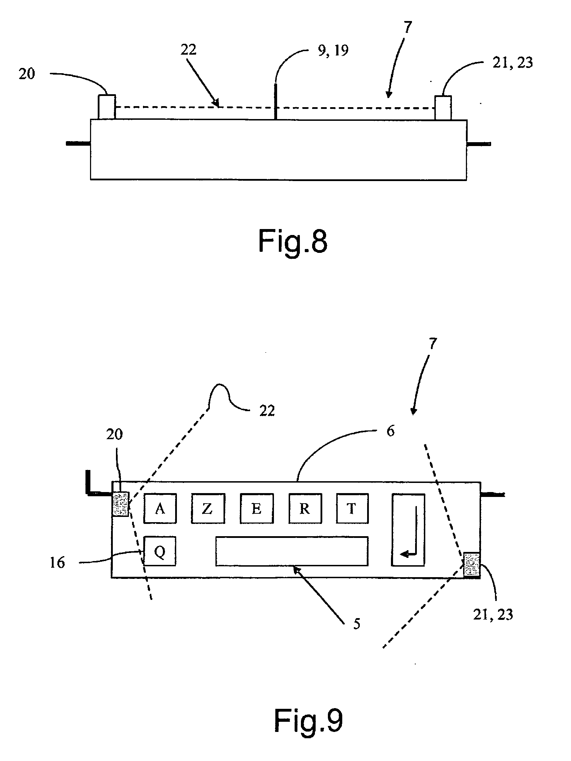

Sur les fig.8 et fig.9, le moyen de détermination 7 permet d'identifier la présence d'un élément 9, tel qu'un obstacle 19 visible sur la fig.8, situé en vis-à-vis de l'une au moins des dites zones 5 du premier élément structurel 6. Le moyen de détermination 7 est aussi apte à déterminer la localisation de l'élément 9 par rapport aux zones 5. Plus particulièrement, le moyen de détermination 7 comprend le premier dispositif 20 émetteur d'ondes infrarouges et le deuxième dispositif 21 récepteur d'ondes infrarouges, comprenant par exemple une caméra 23. Le premier dispositif 20 est apte à émettre une nappe 22 d'ondes infrarouges, préférentiellement orientée parallèlement au premier élément structurel 6. Lorsque l'élément 9, par exemple un doigt de l'utilisateur, un stylet ou analogue, franchit la nappe 22 en direction d'une des zones 5 du premier élément structurel 6, le deuxième dispositif 21 détecte un tel franchissement à partir d'une réception des ondes diffractées par l'élément 9. Le moyen de détermination 7 est apte à déduire de ladite réception de l'information 8 relative à la sollicitation d'une zone 5 spécifique un souhait de commande formulé par l'utilisateur, à partir de la localisation de l'élément 9 manoeuvré par l'utilisateur de manière concourante à la nappe 22. Le moyen de détermination 7 est rapporté sur le premier élément structurel 6, de telle sorte que ce dernier 6 peut être manoeuvré par l'utilisateur sans affecter la précision de la localisation de l'élément 9.

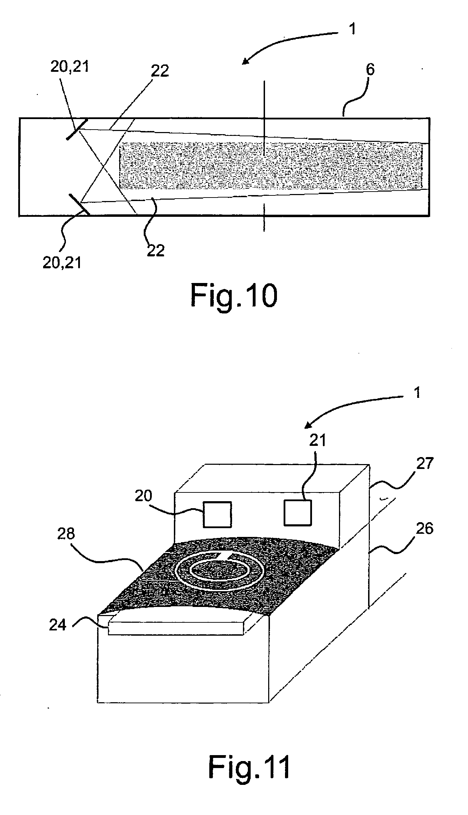

Sur la fig.10, le moyen de détermination 7 comprend deux couples de premier et deuxième dispositifs respectivement émetteurs 20 et récepteurs 21 d'ondes infrarouges pour déterminer la position de l'élément 9 franchissant les nappes respectives 22 que les dispositifs émetteurs/récepteurs 20,21 d'ondes infrarouges produisent.

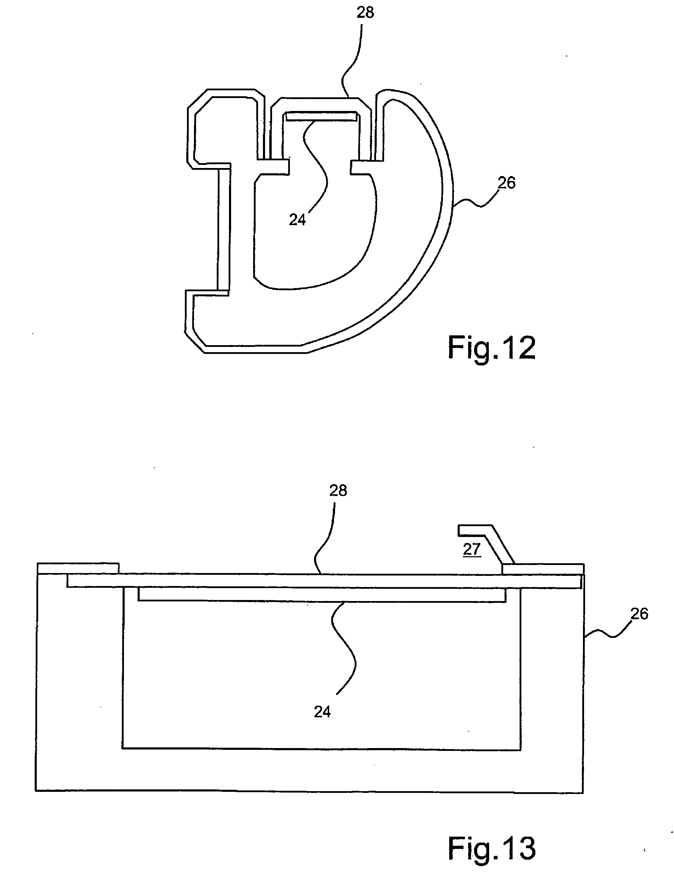

Sur les fig.11 à fig.13, le dispositif de commande 1 est porté par un boîtier 26, tel qu'une poignée d'une console centrale ou une poignée d'une portière latérale. Le boîtier 26 comporte un logement 27 pour la réception des premier et deuxième dispositifs respectivement émetteurs 20 et récepteurs 21 d'ondes infrarouges. Les circuits électroluminescents 24 sont protégés de l'environnement extérieur au boîtier 26 par l'intermédiaire d'une plaque transparente 28, par exemple réalisée en un matériau plastique du type « plexiglass ».

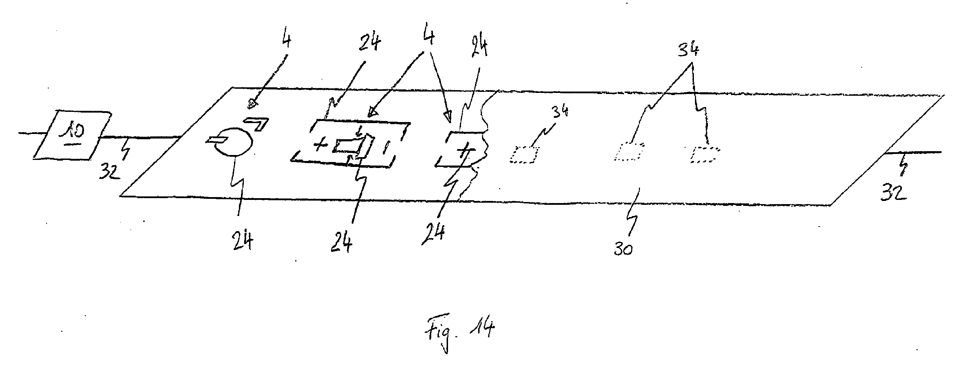

Selon un autre mode de réalisation, illustré en figure 14, le dispositif de commande 1 d'un accessoire 2 comprend comme moyen de délimitation 4 d'au moins une zone 5 la pluralité de circuits électroluminescents 24 et un capteur de pression 30 comme moyen de détermination 7. Le dispositif de commande 1 comprend également le moyen de transformation 10 décrit auparavant.

Ce capteur de pression 30 se présente sous la forme d'une couche sensitive qui se situe sous la pluralité de circuits électroluminescents 24 et est électriquement isolée de celle-ci. Les circuits électroluminescents 24 sont fixés sur le capteur de pression 30 par collage. Relié au moyen de transformation 10 par une connexion électrique 32, le capteur de pression 30 est parcouru par un courant électrique. Ce capteur de pression 30 permet de déterminer quelle zone 5 est sollicitée selon le principe décrit ci-dessous.

On entend par couche « sensitive » le fait que la résistance électrique d'une région de la couche augmente lorsqu'on exerce une pression sur cette région. Les capteurs de pression comprennent des couches semi-conductrices prises en sandwich entre par exemple une couche conductrice et une couche résistive. En exerçant une pression sur la couche résistive, sa résistance ohmique diminue, permettant ainsi, par application d'une tension adaptée, de mesurer la pression appliquée et/ou la localisation de l'endroit où la pression est exercée.

Sous la pression d'un élément 9, tel qu'un stylet ou un doigt de l'utilisateur, sur une zone 5, une région 34 du capteur de pression 30 est pressée. A chaque zone 5 est associée une région 34. Plus précisément, sous chaque zone 5 se situe une région 34 à presser correspondant à une zone 5 spécifique. La pression exercée par l'élément 9 engendre alors une modification de la résistance électrique de la région 34 sollicitée. Cette modification de la résistance électrique est alors détectée par le moyen de transformation 10 et permet de déterminer quelle zone 5 est sollicitée. Ensuite, le moyen de transformation 10 envoie une instruction de commande 11 associée à la zone 5 sollicitée vers l'accessoire 2.

L'avantage de ce mode de réalisation est tout d'abord un gain de compacité du dispositif de commande 1. En effet, le moyen de détermination 7 étant un capteur de pression 30 sous la forme d'une couche sensitive et non plus un dispositif d'émetteur ou de récepteur d'ondes, le dispositif de commande 1 est très peu encombrant et peut être localisé sur n'importe quelle partie de l'habitacle du véhicule.

En outre, le capteur de pression 30 ainsi que les circuits électroluminescents 24 étant souples et flexibles, c'est-à-dire qu'ils peuvent se plier et/ou se courber très facilement, le dispositif de commande 1 peut être alors installé sur toute surface non plane de l'habitacle du véhicule. Ceci présente tout son avantage lorsque le design de l'habitacle du véhicule ne présente peu ou pas de partie plane. Avec un tel dispositif de commande, aucune restriction de design de l'habitacle n'existe.

L'utilisation de ce capteur de pression 30 présente également un gain de coût par rapport à des dispositifs émetteur ou récepteur d'ondes, souvent onéreux et complexes à mettre en oeuvre. En effet, la nappe 22 du dispositif émetteur d'onde 20 peut être souvent perturbée par les sources de lumière naturelles et/ou environnantes, ce qui peut mettre en oeuvre l'accessoire 2 sans une réelle sollicitation de l'utilisateur. La nappe 22 se répartissant sous la forme d'un plan, il est aussi difficile d'utiliser ce moyen de détermination sur une surface non plane de l'habitacle du véhicule, puisqu'un tel moyen de détermination nécessite que l'ensemble des moyens de délimitation se situent sur une surface plane ne traversant pas la nappe 22.

En variante de ce mode de réalisation, la modification de la résistance électrique du capteur de pression 30 est également utilisée par le moyen de transformation 10 pour déterminer l'intensité de la sollicitation de la zone 5. En effet, plus la pression de la zone 5 est élevée, plus la résistance électrique de la couche résistive du capteur de pression 30 diminue. Ainsi, le moyen de transformation 10 détecte la variation continue de la résistance électrique d'une région du capteur de pression 30 et crée une information relative à cette variation, ladite information étant envoyée vers l'accessoire. Selon cette variante, il n'est plus nécessaire pour l'utilisateur d'appuyer plusieurs fois sur la zone 5 à solliciter pour augmenter ou diminuer le niveau de réglage. Une simple pression continue sur la zone 5 à solliciter permettra d'augmenter ou de diminuer le niveau de réglage. Ainsi, le confort d'utilisation du dispositif de commande 1 est amélioré pour l'utilisateur.

Selon une autre variante de ce mode de réalisation, le moyen de délimitation comprend au moins un relief (13) ménagé en surface du premier élément structurel (6).

Selon encore une autre variante de ce mode de réalisation, le moyen de délimitation 4 comprend un élément visuel 14 rapporté en surface du premier élément structurel 6.

Selon encore une autre variante de ce mode de réalisation, le moyen de délimitation 4 comprend des moyens de projection 15 d'une pluralité d'images 16 sur le premier élément structurel 6.

## Revendications

1. Dispositif de commande (1) d'un accessoire (2) d'un véhicule automobile, comprenant :
- un moyen de délimitation (4) d'au moins une zone (5), cette dernière (5) étant associée à une instruction de commande (11) dudit accessoire (2) et localisée sur un premier élément structurel (6) du véhicule,
- un moyen de détermination (7) d'une information (8) relative à la sollicitation de ladite zone (5), et
- un moyen de transformation (10) de ladite information (8) en l'instruction de commande (11) de l'accessoire (2),
**caractérisé en ce que** le moyen de délimitation (4) comprend une pluralité de circuits électroluminescents (24).

2. Dispositif de commande selon la revendication 1, **caractérisé en ce que** ledit moyen de détermination (7) comprend un capteur de pression (30).

3. Dispositif de commande selon la revendication 2, **caractérisé en ce que** le capteur de pression (30) se présente sous la forme d'une couche sensitive.

4. Dispositif de commande selon la revendication 3, **caractérisé en ce que** la couche sensitive se situe sous la pluralité de circuits électroluminescents (24), et est isolée électriquement de celle-ci.

5. Dispositif de commande selon l'une quelconque des revendications 2 à 4, **caractérisé en ce que** la pluralité de circuits électroluminescents (24) est fixée sur le capteur de pression (30) par collage.

6. Dispositif de commande selon l'une quelconque des revendications 1 à 5, **caractérisé en ce que** le moyen de détermination (7) comprend un premier dispositif (20) émetteur d'ondes et un deuxième dispositif (21) récepteur d'ondes.

7. Dispositif de commande selon l'une quelconque des revendications précédentes, **caractérisé en ce que** le moyen de délimitation (4) comprend au moins un relief (13) ménagé en surface du premier élément structurel (6).

8. Dispositif de commande selon l'une quelconque des revendications précédentes, **caractérisé en ce que** le moyen de délimitation (4) comprend un élément visuel (14) rapporté en surface du premier élément structurel (6).

9. Dispositif de commande l'une quelconque des revendications précédentes, **caractérisé en ce que** la pluralité de circuits électroluminescents (24) est rapportée sur le premier élément structurel (6).

10. Dispositif de commande selon l'une quelconque des revendications 1 à 8, **caractérisé en ce que** la pluralité de circuits électroluminescents (24) est intégrée au premier élément structurel (6).

11. Dispositif de commande l'une quelconque des revendications 2 à 10, **caractérisé en ce que** le capteur de pression (30) et les circuits électroluminescents (24) sont souples et flexibles.

12. Dispositif de commande selon l'une quelconque des revendications 6 à 11, **caractérisé en ce que** le premier dispositif (20) est un émetteur d'ondes infrarouges tandis que le deuxième dispositif (21) est un récepteur d'ondes infrarouges (23).

13. Dispositif de commande selon l'une quelconque des revendications précédentes, **caractérisé en ce que** ledit moyen de détermination (7) est rapporté sur le premier élément structurel (6).

14. Dispositif de commande selon l'une quelconque des revendications précédentes, **caractérisé en ce que** le premier élément structurel (6) est un pare-soleil du véhicule.

15. Procédé pour la mise en oeuvre d'un dispositif de commande (1) selon l'une quelconque des revendications 1 à 14, **caractérisé en ce qu'**il comporte au moins une étape consistant à détecter la présence d'un obstacle (9) en vis-à-vis d'une zone spécifique (5) parmi plusieurs zones préalablement délimitées par la pluralité de circuits électroluminescents.

16. Procédé selon la revendication 15, pour la mise en oeuvre d'un dispositif de commande (1) selon l'une quelconque des revendications 3, 4, 5, 7 à 11, 13 et 14 avec la revendication 2, **caractérisé en ce que** l'étape de détection de la présence d'un obstacle (9) en vis-à-vis d'une zone spécifique (5) s'effectue selon une modification de la résistance électrique d'une région (34) d'un capteur de pression (30).

17. Procédé selon la revendication 16, **caractérisé en ce que** qu'il comprend une étape consistant à déterminer l'intensité de la sollicitation de la zone (5), une telle étape étant réalisée par le moyen de transformation (10) utilisant la modification de la résistance électrique du capteur de pression (30).

## Claims

1. Control device (1) for controlling an accessory (2) of a motor vehicle, comprising:
- a zone-delimiting means (4) for delimiting at least one zone (5), this zone (5) being associated with an instruction (11) for controlling said accessory (2) and located on a first structural element (6) of the vehicle;
- an information-determining means (7) for determining information (8) relating to the pressure applied to said zone (5); and
- a conversion means (10) for converting said information (8) into the instruction (11) for controlling the accessory (2),
**characterized in that** the zone-delimiting means (4) comprises a plurality of light-emitting circuits (24).

2. Control device according to Claim 1, **characterized in that** said information-determining means (7) comprises a pressure sensor (30).

3. Control device according to Claim 2, **characterized in that** the pressure sensor (30) takes the form of a sensitive layer.

4. Control device according to Claim 3, **characterized in that** the sensitive layer is located beneath the plurality of light-emitting circuits (24) and is electrically isolated therefrom.

5. Control device according to any one of Claims 2 to 4, **characterized in that** the plurality of light-emitting circuits (24) is fixed to the pressure sensor (30) by means of bonding.

6. Control device according to any one of Claims 1 to 5, **characterized in that** the information-determining means (7) comprises a wave-transmitting first device (20) and a wave-receiving second device (21).

7. Control device according to any one of the preceding claims, **characterized in that** the zone-delimiting means (4) comprises at least one relief (13) provided on the surface of the first structural element (6).

8. Control device according to any one of the preceding claims, **characterized in that** the zone-delimiting means (4) comprises a visual element (14) attached to the surface of the first structural element (6).

9. Control device according to any one of the preceding claims, **characterized in that** the plurality of light-emitting circuits (24) is attached to the first structural element (6).

10. Control device according to any one of Claims 1 to 8, **characterized in that** the plurality of light-emitting circuits (24) is integrated into the first structural element (6).

11. Control device according to any one of Claims 2 to 10, **characterized in that** the pressure sensor (30) and the light-emitting circuits (24) are pliant and flexible.

12. Control device according to any one of Claims 6 to 11, **characterized in that** the first device (20) is an infrared-wave transmitter whereas the second device (21) is an infrared-wave receiver (23).

13. Control device according to any one of the preceding claims, **characterized in that** said information-determining means (7) is attached to the first structural element (6).

14. Control device according to any one of the preceding claims, **characterized in that** the first structural element (6) is a sun visor of the vehicle.

15. Method for operating a control device (1) according to any one of Claims 1 to 14, **characterized in that** it includes at least one step consisting in detecting the presence of an obstacle (9) facing a specific zone (5) from among several zones delimited beforehand by the plurality of light-emitting circuits.

16. Method according to Claim 15, for operating a control device (1) according to any one of Claims 3, 4, 5, 7 to 11, 13 and 14 together with Claim 2, **characterized in that** the step of detecting the presence of an obstacle (9) facing a specific zone (5) is carried out according to a modification in the electrical resistance of a region (34) of a pressure sensor (30).

17. Method according to Claim 16, **characterized in that** it includes a step consisting in determining the intensity of the pressure applied to the zone (5), such a step being carried out by the conversion means (10) using the modification in the electrical resistance of the pressure sensor (30).

## Patentansprüche

1. Steuervorrichtung (1) eines Kraftfahrzeugzubehörs (2), aufweisend:
- ein Mittel (4) zum Abgrenzen mindestens eines Bereichs (5), wobei dieser Letztere (5) mit einer Steueranweisung (11) des Zubehörs (2) verbunden ist und sich auf einem ersten Aufbauelement (6) des Fahrzeugs befindet,
- ein Mittel (7) zum Bestimmen einer Information (8) in Zusammenhang mit der Beanspruchung des Bereichs (5) und
- ein Mittel (10) zum Umwandeln der Information (8) in einen Steuerbefehl (11) des Zubehörs (2),
**dadurch gekennzeichnet, dass** das Abgrenzmittel (4) mehrere elektrolumineszierende Schaltungen (24) aufweist.

2. Steuervorrichtung nach Anspruch 1, **dadurch gekennzeichnet, dass** das Mittel zum Bestimmen (7) einen Druckmessfühler (30) aufweist.

3. Steuervorrichtung nach Anspruch 2, **dadurch gekennzeichnet, dass** der Druckmessfühler (30) die Form einer empfindlichen Schicht hat.

4. Steuervorrichtung nach Anspruch 3, **dadurch gekennzeichnet, dass** sich die empfindliche Schicht unter den mehreren elektrolumineszierenden Schaltungen (24) befindet und von diesen elektrisch isoliert ist.

5. Steuervorrichtung nach einem der Ansprüche 2 bis 4, **dadurch gekennzeichnet, dass** die mehreren elektrolumineszierenden Schaltungen (24) auf dem Druckmessfühler (30) durch Kleben befestigt sind.

6. Steuervorrichtung nach einem der Ansprüche 1 bis 5, **dadurch gekennzeichnet, dass** das Bestimmungsmittel (7) eine erste Vorrichtung (20), die Wellen sendet, und eine zweite Vorrichtung (21), die Wellen empfängt, aufweist.

7. Steuervorrichtung nach einem der vorhergehenden Ansprüche, **dadurch gekennzeichnet, dass** das Abgrenzmittel (4) mindestens ein Relief (13) aufweist, das auf der Oberfläche des ersten Aufbauelements (6) eingerichtet ist.

8. Steuervorrichtung nach einem der vorhergehenden Ansprüche, **dadurch gekennzeichnet, dass** das Abgrenzmittel (4) ein Sichtelement (14) aufweist, das an der Oberfläche des ersten Aufbauelements (6) angebracht ist.

9. Steuervorrichtung nach einem der vorhergehenden Ansprüche, **dadurch gekennzeichnet, dass** die mehreren elektrolumineszierenden Schaltungen (24) auf dem ersten Aufbauelement (6) angebracht sind.

10. Steuervorrichtung nach einem der Ansprüche 1 bis 8, **dadurch gekennzeichnet, dass** die mehreren elektrolumineszierenden Schaltungen (24) in das erste Aufbauelement (6) integriert sind.

11. Steuervorrichtung nach einem der Ansprüche 2 bis 10, **dadurch gekennzeichnet, dass** der Druckmessfühler (30) und die elektrolumineszierenden Schaltungen (24) geschmeidig und biegsam sind.

12. Steuervorrichtung nach einem der Ansprüche 6 bis 11, **dadurch gekennzeichnet, dass** die erste Vorrichtung (20) ein Infrarotwellensender ist, während die zweite Vorrichtung (21) ein Infrarotwellenempfänger (23) ist.

13. Steuervorrichtung nach einem der vorhergehenden Ansprüche, **dadurch gekennzeichnet, dass** das Bestimmungsmittel (7) auf dem ersten Aufbauelement (6) angebracht ist.

14. Steuervorrichtung nach einem der vorhergehenden Ansprüche, **dadurch gekennzeichnet, dass** das erste Aufbauelement (6) eine Sonnenblende des Fahrzeugs ist.

15. Verfahren zum Umsetzen einer Steuervorrichtung (1) nach einem der Ansprüche 1 bis 14, **dadurch gekennzeichnet, dass** es mindestens einen Schritt aufweist, der darin besteht, die Gegenwart eines Hindernisses (9) gegenüber einem spezifischen Bereich (5) unter mehreren Bereichen, die vorab durch die mehreren elektrolumineszierenden Schaltungen abgegrenzt wurden, zu erfassen.

16. Verfahren nach Anspruch 15 zum Umsetzen einer Steuervorrichtung (1) nach einem der Ansprüche 3, 4, 5, 7 bis 11, 13 und 14 mit Anspruch 2, **dadurch gekennzeichnet, dass** der Schritt des Erfassens der Gegenwart eines Hindernisses (9) gegenüber einem spezifischen Bereich (5) gemäß einer Änderung des elektrischen Widerstands eines Bereichs (34) eines Druckmessfühlers (30) erfolgt.

17. Verfahren nach Anspruch 16, **dadurch gekennzeichnet, dass** es einen Schritt aufweist, der darin besteht, die Stärke der Beanspruchung des Bereichs (5) zu bestimmen, wobei ein derartiger Schritt von dem Mittel zum Umwandeln (10), das die Änderung des elektrischen Widerstands des Druckmessfühlers (30) verwendet, ausgeführt wird.
